# EUROPEAN PATENT APPLICATION

(11) **EP 0 757 190 A1**
(43) Date of publication of application: **05.02.1997**
(21) Application number: 96201806.5
(22) Date of filing: 29.06.1996
(51) Int. Cl.: F16H 7/12

(54) **Bidirectional elastic chain tightener**

(30) Priority: 04.08.1995 IT MI951736
(71) Applicant: CASTELGARDEN S.P.A., I-31033 Castelfranco Veneto (Treviso ) (IT)
(72) Inventor: Ferrari, Maurizio, 20144 Milano (IT)
(74) Representative: Mittler, Enrico

(57) **Abstract**

A bidirectional elastic chain tightener (1) comprises two support arms (2, 3) for respective idle wheels (4, 5). The two arms (2, 3) are hinged one to the other by means of a pivotal pin (10), whereon a torsion spring (15) is wound and hooked to said arms (2,3) in order to force them towards a minimum divergence position.

## Description

The present invention relates to a bidirectional and elastic chain tightener, which is capable of acting equally in the two directions of movement of the chain.

A chain tightener is classically a device which co-operates with a motion transmission chain in order to maintain it tight in the required manner.

More traditional chain tighteners comprise an idle cogged wheel maintained by an adjusting screw in a predetermined position of tightness of the chain.

More recent chain tighteners comprise elastic elements capable of avoiding the rigidity of traditional chain tighteners. These are however very costly and bulky systems, used solely for heavy transmissions.

In view of this state of the art, the object of the present invention has been that of providing a bidirectional elastic chain tightener which is advantageous in relation to both traditional rigid chain tighteners and to the elastic chain tighteners currrently in use.

In accordance with the invention, this object has been achieved by means of a chain tightener characterised in that it comprises two support arms for respective idle wheels, hinged one to the other by means of a pivotal pin, and a torsion spring wound around the aforementioned pin and hooked to said arms so as to force them towards a minimum divergence position.

In this way an elastic chain tightener is obtained which ensures the aforementioned advantages;
- it acts in an identical manner both during the forward run and during the backward run of the chain transmission;
- it avoids sudden jerks during engaging with consequent reduced wear of the chain and low strain of the components of the pivot point;
- it automatically recovers elongations of the chain, thus avoiding the need for manual adjustments;
- it has low costs and small overall dimensions.

These and other features and advantages of the present invention will be made clearer by the following detailed description of one of its embodiments illustrated by way of a non-limiting example in the accompanying drawings, in which:
Fig. 1 shows an elastic chain tightener according to the invention in a condition of minimum divergence;
Fig. 2 shows the aforementioned chain tightener in a condition of maximum divergence;
Fig. 3 shows the aforementioned chain tightener sectioned along line III-III of Fig. 2;
Fig. 4 shows a chain transmission with chain tightener according to the invention in a condition of forward run;
Fig. 5 shows a chain transmission with chain tightener according to the invention in a condition of backward run.

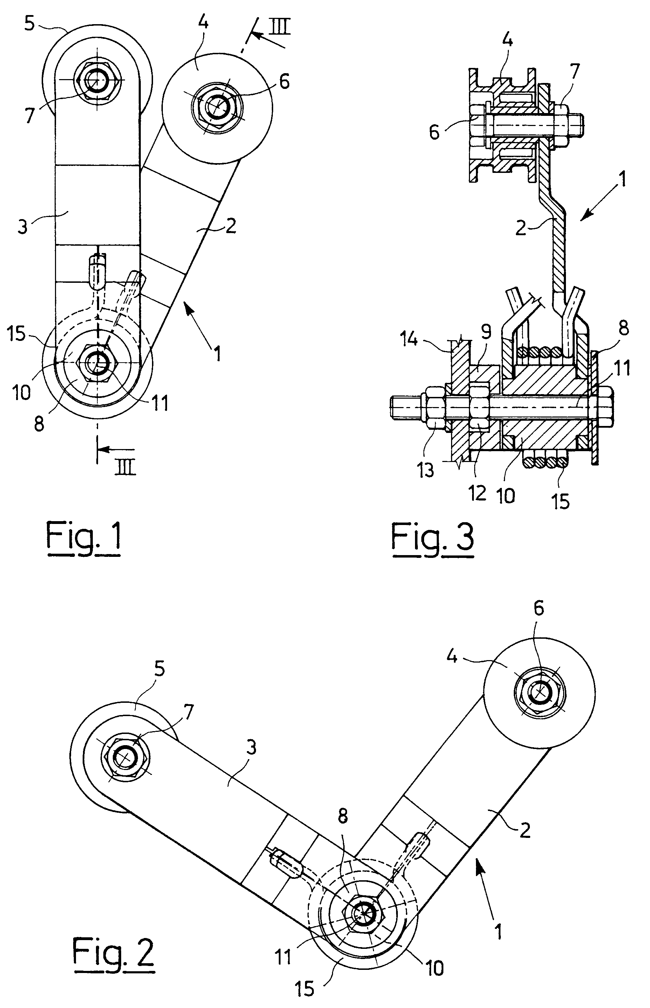

An elastic chain tightener according to the present invention is shown and denoted overall by 1 in Figures 1, 2 and 3 and comprises two support arms 2 and 3 for respective idle cogged wheels 4 and 5, rotatably attached to respective ends of the arms 2 and 3 by means of bolts 6 with nuts 7 (Fig. 3).

The other ends of the arms 2 and 3 are hinged one to the other by means of a pivotal pin 10, in turn rotatably mounted on a bolt 11 which with the aid of nuts 12 and 13 restrains the two arms 2 and 3 at the two sides of the pin 10 and attaches the whole on a support body 14 (Fig. 3).

A torsion spring 15 is wound around the pin 10 and hooked at the ends to the arms 2 and 3 to force them towards the position of minimum divergence of Fig. 1. Against the action of the spring 15 the two arms 2 and 3 can on the other hand be moved as far as the position of maximum divergence of Fig. 2.

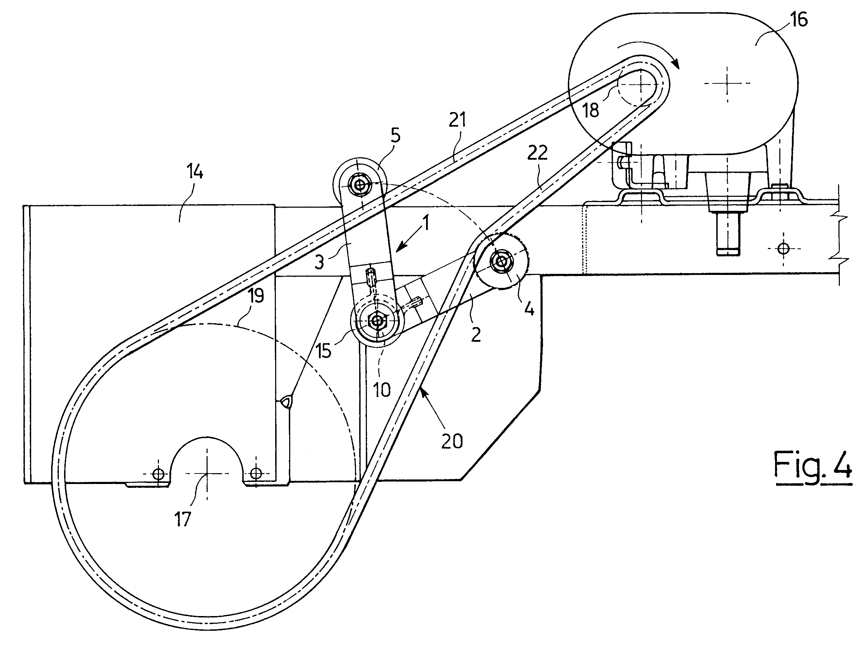

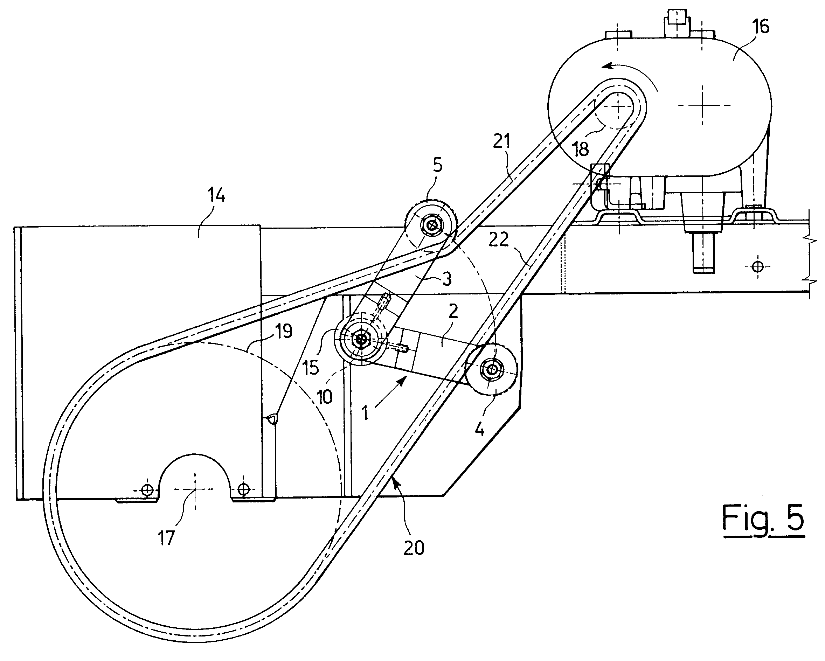

Figures 4 and 5 show a chain transmission which uses a chain tightener according to the invention. Purely by way of a non-limiting example a chain transmission is foreseen for a lawn mower, which is used to transmit motion from a motor 16 to a pair of driving wheels with common axle 17. The chain transmission comprises a first cogged wheel of smaller diameter 18 actuated by the motor 16, a cogged wheel of larger diameter 19 mounted in turn on the axle 17 and a transmission chain 20. 14 in Figures 4 and 5 denotes the chassis of the machine, which acts as a support for the motor 16, the wheels axle 17 and the chain transmission.

The chain transmission also comprises a chain tightener 1, according to Figures 1, 2 and 3, which has the pivotal pin 10 rotatably supported by the body 14 and the two idle cogged wheels 4 and 5 engaged with respective opposite branches 21 and 22 of the chain 20, which maintain the two arms 2 and 3 in a divergent position.

Through the effect of the elastic action of the torsion spring 15, when the chain transmission is actuated by the motor 16 in the run condition of Fig. 4, considered by way of an example the forward run condition, the driven branch (21) of the chain 20 is maintained tight and maintains in turn the corresponding arm (3) of the chain tightener 1 divergent, while the other branch (22) of the chain 20 is maintained partially bent by the other arm (2) of the chain tightener. The opposite occurs during the reverse (backward) run of the chain transmission illustrated in Fig. 5.

It should be noted that, while hitherto mention has always been made of "chain", "chain tightener" and "cogged wheels", the essential concepts of the present invention also hold true for and can be immediately applied to "belt" transmission systems, which in this case comprise "pulleys" and, obviously, a "belt tightener" made in accordance with the "chain tightener" according to the invention.

## Claims

1. Bidirectional elastic chain tightener (1), characterised in that it comprises two support arms (2, 3) for respective idle wheels (4, 5), hinged one to the other by means of a pivotal pin (10), and a torsion spring (15) wound around the aforementioned pin (10) and hooked to said arms (2, 3) so as to force them towards a minimum divergence position.

2. Bidirectional elastic chain tightener according to claim 1, characterised in that each of said arms (2, 3) holds rotatably at one end a respective idle wheel (4, 5) suitable for engaging with a transmission chain (20), while the other end of each arm (2, 3) is rotatably coupled to the other end of the other arm (2, 3) by means of said pivotal pin (10).
